# EUROPEAN PATENT SPECIFICATION

(11) **EP 1 610 533 B1**
(45) Date of publication and mention of the grant of the patent: **13.02.2013**
(21) Application number: 05013606.8
(22) Date of filing: 23.06.2005
(51) Int. Cl.: H04M 1/247, H04M 19/04, H04M 1/725

(54) **Method for performing functions associated with a phone number in a mobile communication terminal**
Verfahren für das Durchführen der Funktionen verbunden mit einer Telefonnummer in einem Mobilkommunikationsendgerät
Procédé pour effectuer des fonctionnements liés à un numéro de téléphone dans un terminal de communication mobile

(30) Priority: 24.06.2004 KR 2004047810
(43) Date of publication of application: 28.12.2005
(60) Divisional application: 12195689.0
(73) Proprietor: Samsung Electronics Co., Ltd., Suwon-si, Gyeonggi-do, 443-742 (KR)
(72) Inventor: Kwon, Hae-Moon, Yeongtong-gu Suwon-si Gyeonggi-do (KR); Jin, Jeong-Gyu, Yeongtong-gu Suwon-si Gyeonggi-do (KR)
(74) Representative: Grünecker, Kinkeldey, Stockmair & Schwanhäusser

(56) References cited:
- EP-A2- 0 860 972
- US-A1- 2003 084 121
- US-A1- 2004 004 598

## Description

The present invention relates generally to a mobile communication terminal, and more particularly to a method for performing specific functions associated with a phone number.

Mobile communication terminals are portable devices that generally perform communication functions. A mobile communication terminal stores a plurality of phone numbers input by a user.

The user can perform specific functions associated with a phone number stored in the mobile communication terminal. The specific functions include a message transmission function, a specific ring sound selection function, a phone number-by-number image storage function, a homepage access function, etc. That is, the user can select one of the phone numbers stored in the mobile communication terminal as a phone number of a receiver and transmit a text message to the selected phone number, can set up a function for generating a specific ring sound when a call is received from a specific phone number, or can map each phone number to an image and store the phone number and the image mapped to each other.

When transmitting the text message by means of the mobile communication terminal, the user manually inputs a phone number of the receiver for receiving the text message. Alternatively, when the user cannot remember the receiver's phone number, the user can search for the receiver's phone number from previously stored phone numbers, select the searched phone number, and input the selected phone number. However, when searching for the phone number of the receiver for receiving the text message from the previously stored phone numbers, the user must perform multiple steps such as accessing an electronic phone book, inputting a keyword to search for the receiver's phone number, inputting a search request, and selecting the receiver's phone number in response to a result of the search.

When selecting a specific ring sound corresponding to each phone number, the user must perform multiple steps that include accessing the electronic phone book, selecting the phone number, and selecting the specific ring sound based on the selected phone number.

When mapping each phone number to an image and storing the phone number and the image mapped to each other in the terminal, the user selects from among the stored phone numbers a predetermined phone number to be mapped to a previously stored image, selects the previously stored image, maps the selected phone number to the selected image, and stores in the terminal the phone number and the image mapped to each other. The image to be mapped to the phone number must be previously stored. Accordingly, when a corresponding image is absent, a complex procedure is required because the user terminates a function for mapping and storing a phone number and an image and must re-perform the function after storing a new image.

United States patent application US 2003/0084121 discloses a prior art example.

As stated above, a complex procedure requiring multiple steps is needed to perform a specific function associated with a phone number such as a message transmission function, a specific ring sound selection function, a phone number-by-number image storage function, a homepage access function, etc. in the conventional mobile communication terminal.

Accordingly, the present invention has been designed to solve at least the above and other problems occurring in the prior art. Therefore, it is the object of the present invention to perform a specific function associated with a phone number immediately after the phone number is input and then a specific function key is input.

This object is solved by the subject matter of the independent claims.

Preferred embodiments are defined in the dependent claims.

It is an aspect of the present invention to perform a message transmission function that inputs a phone number as a phone number of a message receiver immediately after the phone number is input and then a message key is input.

It is another aspect of the present invention to perform a ring sound selection function that displays a screen for designating a specific ring sound associated with a phone number immediately after the phone number is input and then a ring sound selection key is input.

It is yet another aspect of the present invention to perform an image capture and storage function associated with a phone number that captures and stores a new image associated with a phone number immediately after the phone number is input and then a camera key is input.

In accordance with an aspect of the present invention, the above and other objects can be accomplished by the method of claim 1.

The above object and other aspects, features and other advantages of the present invention will be more clearly understood from the following detailed description taken in conjunction with the accompanying drawings, in which:
FIG. 1 is a block diagram illustrating a mobile communication terminal in accordance with an embodiment of the present invention;
FIG. 2 illustrates function keys of the mobile communication terminal in accordance with an embodiment of the present invention;
FIG. 3 is a flow chart illustrating a method for performing a specific function using a searched phone number in accordance with an embodiment of the present invention;
FIG. 4 illustrates exemplary screens used to perform a message transmission function when a message key is input in accordance with an embodiment of the present invention;
FIG. 5 illustrates exemplary screens used to perform a ring sound selection function in accordance with an embodiment of the present invention; and
FIG. 6 illustrates exemplary screens used to perform an image capture and storage function associated with a phone number in accordance with an embodiment of the present invention.

Embodiments of the present invention will now be described in detail herein below with reference to the accompanying drawings. In the drawings, the same or similar elements are denoted by the same reference numerals even though they are depicted in different drawings. Additionally, in the following description, a detailed description of known functions and configurations incorporated herein will be omitted for conciseness.

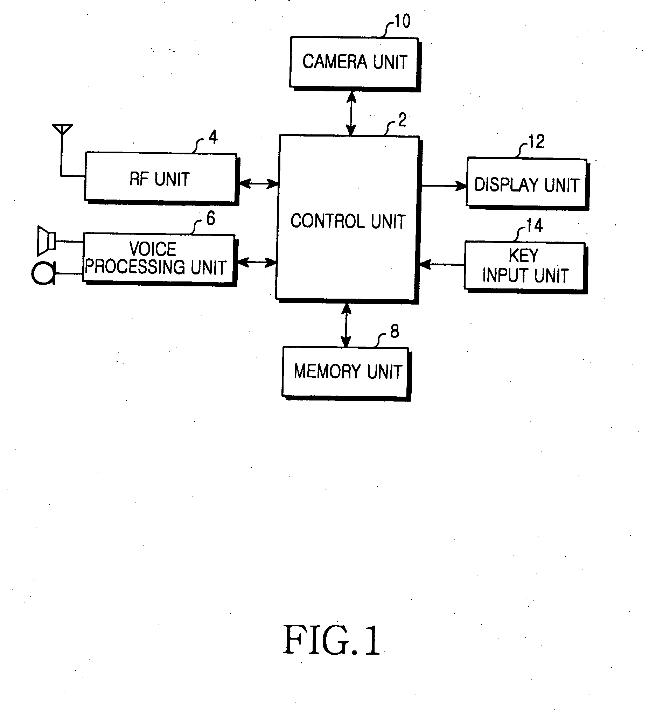

FIG. 1 is a block diagram illustrating a mobile communication terminal in accordance with an embodiment of the present invention. Referring to FIG. 1, the mobile communication terminal in accordance with the embodiment of the present invention includes a control unit 2, a radio frequency (RF) unit 4, a voice processing unit 6, a memory unit 8, a camera unit 10, a display unit 12, and a key input unit 14.

The control unit 2 controls the overall operation of the mobile communication terminal, searches for one or more phone numbers in an idle state, and displays the searched phone numbers in accordance with the embodiment of the present invention. Moreover, the control unit 2 selects and inputs a predetermined phone number of the searched phone numbers, and performs a predetermined function associated with the selected and input phone number when detecting an input of a predetermined function key.

The RF unit 4 converts voice data and control data into an RF signal to transmit the RF signal, and converts a received RF signal into voice data or control data to output the voice or control data. A voice processing unit 6 converts voice data into an audible sound and outputs the audible sound through a speaker. Moreover, the voice processing unit 6 converts a voice signal received from a microphone into data and outputs the data.

The memory unit 8 is constructed from a read only memory (ROM), a random access memory (RAM), etc., for storing a plurality of programs and data. The memory unit 8 also stores a plurality of phone numbers, names, images, etc. corresponding to the plurality of phone numbers in accordance with the embodiment of the present invention.

The camera unit 10 captures an image of an object under control of the control unit 2, outputs a signal of the captured image, and outputs screen data to display the image signal.

The display unit 12 can be constructed from a liquid crystal display (LCD). The display unit 12 displays a searched phone number, and displays a screen necessary to perform a specific function associated with the searched phone number. Moreover, the display unit 12 displays screen data output from the camera unit 10 when a capture operation is performed.

The key input unit 14 includes a plurality of digit and character keys. The key input unit 14 receives a keyword for a phone number search from a user, and outputs a key input signal to the control unit 2. The key input unit 14 also includes function keys to perform functions associated with a phone number. The function keys can before example a message key, a ring sound selection key, a camera key, a web access key, etc.

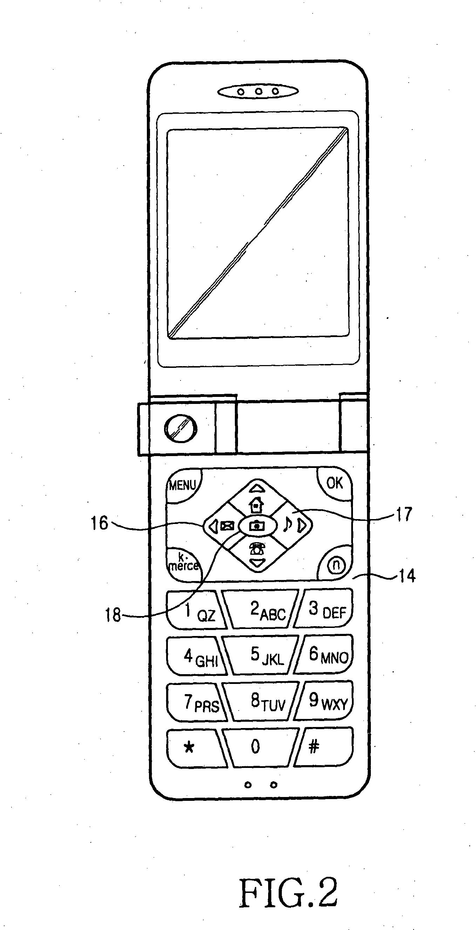

FIG. 2 illustrates the key input unit 14 of the mobile communication terminal in accordance with an embodiment of the present invention. Shown in FIG. 2 are a message key 16, a ring sound selection key 17, and a camera key 18. When the user presses the message key 16, a message key input signal is applied to the control unit 12. When a phone number is input and then the message key input signal is received, the control unit 2 inputs the phone number as a phone number of a message receiver to perform a message transmission function. When the user inputs the ring sound selection key 17, a ring sound selection key input signal is applied to the control unit 2. When a phone number is input and then the ring sound selection key input signal is received, the control unit 2 performs a function for selecting a specific ring sound associated with the input phone number. Further, when the user inputs the camera key 18, a camera key input signal is applied to the control unit 2. When a phone number is input and the camera key input signal is received, the control unit 2 performs an image capture function associated with the input phone number.

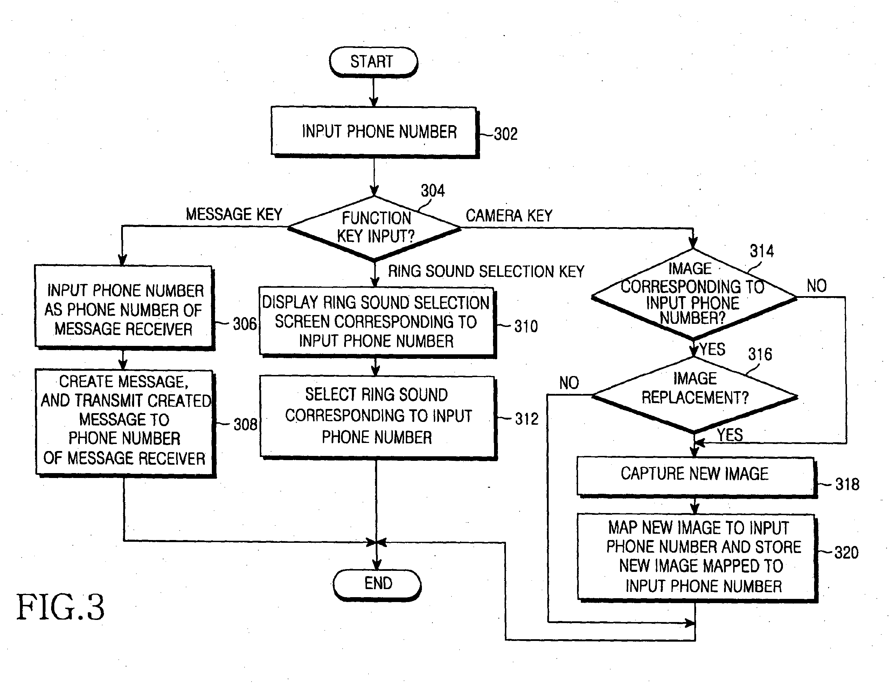

FIG. 3 is a flow chart illustrating a method for performing a specific function using a previously input phone number in response to a key input in accordance with an embodiment of the present invention.

Referring to FIG. 3, the mobile communication terminal receives a phone number input in step 302.

In accordance with the embodiment of the present invention, a phone number input method in step 302 can use various methods such as a method for manually inputting a digit keyword corresponding to a target phone number, a method for searching for the target phone number from a phone number list to input the searched phone number, etc.

After the phone number input in step 302, the mobile communication terminal determines if a specific function key is input from the user. At this point, the specific function key input is a message key input, a ring sound selection key input, a camera key input, etc.

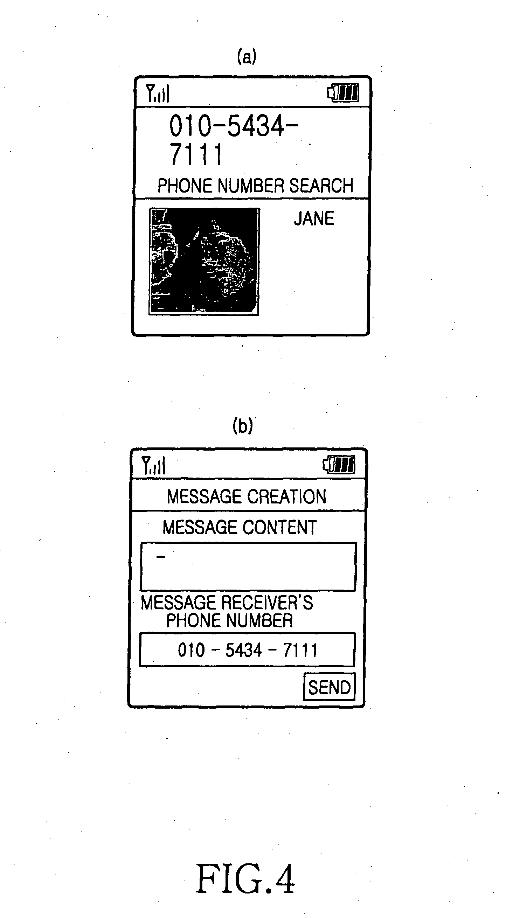

First, a case where the message key is input will be described. FIG. 4 illustrates exemplary screens used to perform a message transmission function when the message key is input in accordance with an embodiment of the present invention. When the user inputs the message key in a state in which an input phone number of "010-5434-7111" is displayed as illustrated in diagram (a) of FIG. 4, the procedure shown in FIG. 3 proceeds to step 306. In step 306, the mobile communication terminal inputs the input phone number as a phone number of a message receiver. For example, the mobile communication terminal inputs the input phone number of "010-5434-7111" as the phone number of the message receiver as illustrated in diagram (b) of FIG. 4. Then, the mobile communication terminal creates a message to transmit the created message to the phone number of the message receiver in step 308.

In accordance with the embodiment of the present invention, the mobile communication terminal inputs an input phone number as a phone number of a message receiver immediately after the phone number is input and then the message key is input, thereby reducing the number of steps for transmitting a message.

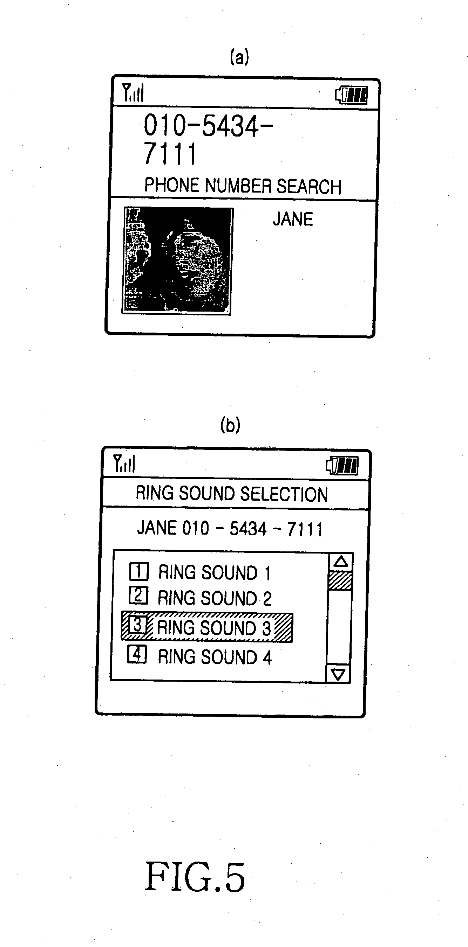

Next, a case where the ring sound selection key is input will be described. FIG. 5 illustrates exemplary screens used to perform a ring sound selection function when the ring sound selection key is input in accordance with an embodiment of the present invention. When the user inputs the ring sound key in a state in which an input phone number of "010-5434-7111" is displayed as illustrated in diagram (a) of FIG. 5, the procedure shown in FIG. 3 proceeds to step 310. In step 310, the mobile communication terminal displays a screen for ring sound selection corresponding to the input phone number selected by the user. For example, the mobile communication terminal displays a screen for ring sound selection corresponding to the input phone number of "010-5434-7111" as illustrated in diagram (b) of FIG. 5. In step 312, the mobile communication terminal selects a ring sound corresponding to the input phone number of "010-5434-7111" as a ring sound selected by the user. For example, the mobile communication terminal selects a ring sound corresponding to the input phone number of "010-5434-7111" as a ring sound selected by the user from among previously stored ring sounds (e.g., Ring Sound 1, Ring Sound 2, etc.) as illustrated in diagram (b) of FIG. 5.

In accordance with the embodiment of the present invention, the mobile communication terminal can select a ring sound associated with a phone number through a simple procedure that displays a screen for designating a specific ring sound associated with the phone number immediately after the phone number is input and then the ring sound selection key is input.

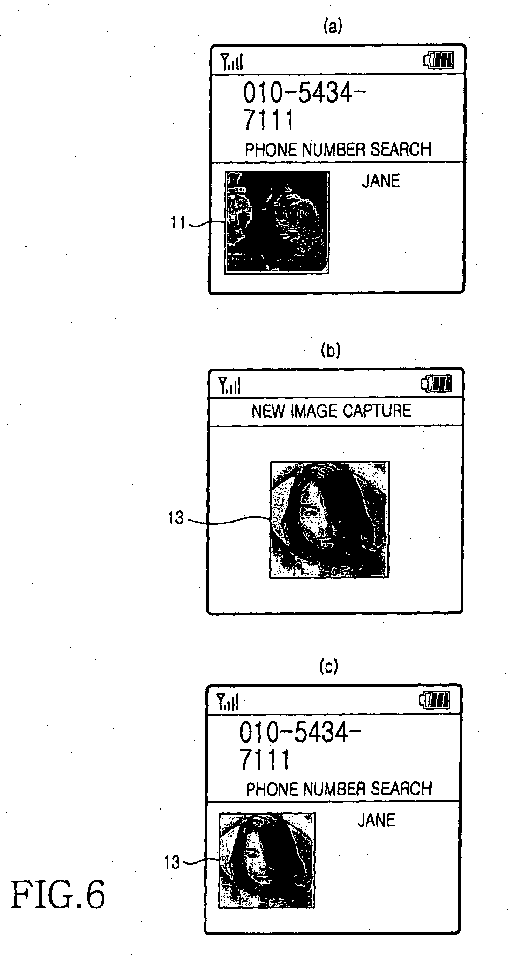

Next, a case where the camera key is input will be described. FIG. 6 illustrates exemplary screens used to perform an image capture function when the camera key is input in accordance with an embodiment of the present invention. When the user inputs the camera key in a state in which an input phone number of "010-5434-7111" is displayed as illustrated in diagram (a) of FIG. 6, the procedure shown in FIG. 3 proceeds to step 314. In step 314, the mobile communication terminal determines if an image corresponding to the input phone number is present. If the image 11 corresponding to the input phone number is present as illustrated in diagram (a) of FIG. 6, the mobile communication terminal asks the user if he or she wants to replace the existing image 11 with a new image in step 316. When the user inputs a signal for replacing the existing image 11 with the new image, the procedure proceeds to step 318. When the user does not replace the existing image 11 with a new image, the procedure shown in FIG. 3 is terminated. However, if an image corresponding to the input phone number is absent, the procedure shown in FIG. 3 proceeds to step 318. In step 318, the mobile communication terminal activates the camera unit 12 and captures the new image 13 as illustrated in diagram (b) of FIG. 6. In step 320, the mobile communication terminal replaces the existing image 11 with the new image 13 if the existing image 11 is present. However, if the existing image 11 is absent, the mobile communication terminal maps the new image 13 to the input phone number and stores the new image 13 mapped to the input phone number.

In accordance with the embodiment of the present invention, the mobile communication terminal can perform an image capture and storage function associated with a phone number through a simple procedure that captures and stores a new image associated with an input phone number immediately after the phone number is input and then the camera key is input.

Consequently, the present invention can perform a specific function associated with a phone number through a simple procedure that performs a specific function using an input phone number immediately after the phone number is input and then a specific function key is input.

The present invention can perform a message transmission function through a simple procedure immediately after a phone number is input and then a message key is input. Moreover, the present invention can select a ring sound associated with a phone number through a simple procedure that displays a screen for designating a specific ring sound associated with the phone number immediately after the phone number is input and then a ring sound selection key is input. Further, the present invention can perform an image capture and storage function associated with a phone number through a simple procedure that captures and stores a new image associated with an input phone number immediately after the phone number is input and then a camera key is input.

Although certain embodiments of the present invention have been disclosed for illustrative purposes, those skilled in the art will appreciate that various modifications, additions and substitutions are possible, without departing from the scope of the present invention. For example, specific functions such as a message transmission function, a specific ring sound selection function, an image capture and storage function associated with a phone number have been described in the embodiments of the present invention. However, the specific functions can include any function associated with a phone number such as a phone number editing function, an electronic mail (E-mail) creating function using an E-mail address registered in a phone book, or a homepage access function in the embodiments of the present invention. Therefore, the present invention is not limited to the above-described embodiments, but is defined by the following claims.

## Claims

1. A method for performing a function using a phone number in a mobile communication terminal that stores a plurality of phone numbers and includes at least one function key, comprising:
inputting a phone number;
inputting a function key;
**characterized by**
determining if an image corresponding to the input phone number exists;
capturing an image by a camera unit when a signal for replacing the existing image with a new image is input, mapping the captured image to the input phone number, and storing the captured image mapped to the input phone number, if the function is a phone number image storage function.

2. The method of claim 1, wherein storing the image comprises:
activating the camera unit to capture the image corresponding to the input phone number;
capturing the image by means of the camera unit; and
mapping the captured image to the input phone number and storing the captured image mapped to the input phone number.

3. The method of claim 1 or 2, further comprising:
the input phone number as a phone number of a message receiver, editing a message, and transmitting the edited message, if the function is a message function.

4. The method of claim 3, wherein editing the message comprises:
displaying a message editing screen in which the input phone number is input as the phone number of the message receiver;
creating the message in the displayed message editing screen; and
the created message to the phone number of the message receiver.

5. The method of one of claims 1 to 4, further comprising:
selecting a ring sound corresponding to the input phone number, if the function is a ring sound function.

6. The method of claim 5, wherein selecting the ring sound comprises:
displaying a ring sound selection screen for selecting the ring sound corresponding to the input phone number;
a ring sound from among ring sounds displayed on the ring sound selection screen; and
mapping the selected ring sound to the input phone number and storing the selected ring sound mapped to the input phone number such that the selected ring sound is output when a call is received from the input phone number.

## Patentansprüche

1. Verfahren zum Durchführen einer Funktion unter Verwendung einer Telefonnummer in einem Mobilkommunikations-Endgerät, das eine Vielzahl von Telefonnummern speichert und wenigstens eine Funktionstaste enthält, wobei das Verfahren umfasst:
Eingeben einer Telefonnummer;
Betätigen einer Funktionstaste;
**gekennzeichnet durch**
Feststellen, ob ein Bild vorhanden ist, das der eingegebenen Telefonnummer entspricht;
Aufnehmen eines Bildes mit einer Kameraeinheit, wenn ein Signal zum Ersetzen des vorhandenen Bildes **durch** ein neues Bild eingegeben wird, Zuordnen des aufgenommenen Bildes zu der eingegebenen Telefonnummer und Speichern des der eingegebenen Telefonnummer zugeordneten aufgenommenen Bildes, wenn die Funktion eine Funktion zum Speichern eines Telefonnummern-Bildes ist.

2. Verfahren nach Anspruch 1, wobei Speichern des Bildes umfasst:
Aktivieren der Kameraeinheit, um das der eingegebenen Telefonnummer entsprechende Bild aufzunehmen;
Aufnehmen des Bildes mittels der Kameraeinheit; und
Zuordnen des aufgenommenen Bildes zu der eingegebenen Telefonnummer sowie Speichern des der eingegebenen Telefonnummer zugeordneten aufgenommenen Bildes.

3. Verfahren nach Anspruch 1 oder 2, das des Weiteren umfasst:
die eingegebene Telefonnummer als eine Telefonnummer eines Nachrichtenempfängers,
Bearbeiten einer Nachricht und Senden der bearbeiteten Nachricht, wenn die Funktion eine Nachrichtenfunktion ist.

4. Verfahren nach Anspruch 3, wobei Bearbeiten der Nachricht umfasst:
Anzeigen eines Nachrichtenbearbeitungs-Bildschirms, auf dem die eingegebene Telefonnummer als die Telefonnummer des Nachrichtenempfängers eingegeben wird;
Erzeugen der Nachricht auf dem angezeigten Nachrichtenbearbeitungs-Bildschirm; und
Senden der erzeugten Nachricht an die Telefonnummer des Nachrichtenempfängers.

5. Verfahren nach einem der Ansprüche 1 bis 4, das des Weiteren umfasst:
Auswählen eines Klingeltons, der der eingegebenen Telefonnummer entspricht, wenn die Funktion eine Klingelton-Funktion ist.

6. Verfahren nach Anspruch 5, wobei Auswählen des Klingeltons umfasst:
Anzeigen eines Bildschirms zum Auswählen von Klingeltönen, auf dem der Klingelton ausgewählt wird, der der eingegebenen Telefonnummer entspricht;
Auswählen eines Klingeltons aus den auf dem Bildschirm zum Auswählen von Klingeltönen angezeigten Klingeltönen; und
Zuordnen des ausgewählten Klingeltons zu der eingegebenen Telefonnummer und Speichern des der eingegebenen Telefonnummer zugeordneten ausgewählten Klingeltons, so dass der ausgewählte Klingelton ausgegeben wird, wenn ein Ruf von der eingegebenen Telefonnummer empfangen wird.

## Revendications

1. Procédé pour exécuter une fonction utilisant un numéro de téléphone dans un terminal de communication mobile contenant une pluralité de numéros de téléphone et comportant au moins une touche de fonction, comprenant :
l'entrée d'un numéro de téléphone ;
l'entrée d'une touche de fonction ;
**caractérisé par**
la détermination de l'existence d'une image correspondant au numéro de téléphone entré ;
la prise d'une image par une unité de prise de vue lorsqu'un signal de remplacement de l'image existante par une nouvelle image est entré, la mise en correspondance de l'image prise avec le numéro de téléphone entré et la mémorisation de l'image prise mise en correspondance avec le numéro de téléphone entré, si la fonction est une fonction de mémorisation d'image de numéro de téléphone.

2. Procédé selon la revendication 1, dans lequel la mémorisation de l'image comprend :
l'activation de l'unité de prise de vue pour prendre l'image correspondant au numéro de téléphone entré ;
la prise de l'image au moyen de l'unité de prise de vue ; et
la mise en correspondance de l'image prise avec le numéro de téléphone entré et la mémorisation de l'image
prise mise en correspondance avec le numéro de téléphone entré.

3. Procédé selon la revendication 1 ou 2, comprenant en outre :
le numéro de téléphone en tant que numéro de téléphone d'un récepteur de message, l'édition d'un message et la transmission du message édité, si la fonction est une fonction de message.

4. Procédé selon la revendication 3, dans lequel l'édition du message comprend :
l'affichage d'un écran d'édition de message dans lequel le numéro de téléphone entré est appliqué en entrée en tant que numéro de téléphone du récepteur de message ;
la création du message dans l'écran d'édition de message affiché ; et
le message créé pour le numéro de téléphone du récepteur de message.

5. Procédé selon l'une des revendications 1 à 4, comprenant en outre :
la sélection d'une tonalité de sonnerie correspondant au numéro de téléphone entré, si la fonction est une fonction de tonalité de sonnerie.

6. Procédé selon la revendication 5, dans lequel la sélection de la tonalité de sonnerie comprend :
l'affichage d'un écran de sélection de tonalité de sonnerie pour sélectionner la tonalité de sonnerie correspondant au numéro de téléphone entré ;
une tonalité de sonnerie parmi les tonalités de sonnerie affichées sur l'écran de sélection de tonalité de sonnerie ; et
la mise en correspondance de la tonalité de sonnerie sélectionnée avec le numéro de téléphone entré et la mémorisation de la tonalité de sonnerie sélectionnée mise en correspondance avec le numéro de téléphone entré, de telle sorte que la tonalité de sonnerie sélectionnée soit fournie en sortie lorsqu'un appel est reçu du numéro de téléphone entré.
